# FASCICULE DE BREVET EUROPEEN

(11) **EP 3 789 246 B1**
(45) Date de publication et mention de la délivrance du brevet: **15.12.2021**
(21) Numéro de dépôt: 20184565.8
(22) Date de dépôt: 07.07.2020
(51) Int. Cl.: B60R 7/04

(54) **DISPOSITIF DE RANGEMENT À TIROIR D'UN VÉHICULE AUTOMOBILE**
VORRICHTUNG ZUM VERSTAUEN MIT SCHUBLADEN FÜR EIN KRAFTFAHRZEUG
STORAGE DEVICE WITH DRAWER FOR A MOTOR VEHICLE

(30) Priorité: 09.09.2019 FR 1909866
(43) Date de publication de la demande: 10.03.2021
(73) Titulaire: Renault S.A.S., 92100 Boulogne-Billancourt (FR)
(72) Inventeur: DARGENT, Olivier, 91510 Lardy (FR); FABRE, Jean-Michel, 95600 EAUBONNE (FR); MARCEAU, Thierry, 92500 rueil malmaison (FR)

(56) Documents cités:
- WO-A1-2017/060576
- DE-A1- 10 154 274
- FR-A1- 3 042 454

## Description

La présente invention concerne un compartiment de rangement d'un véhicule automobile, typiquement un tiroir intégré à une planche de bord d'un véhicule automobile.

Le document FR 3 042 454 divulgue un dispositif de rangement d'un véhicule automobile selon le préambule de la revendication 1.

Les tiroirs connus sont généralement maintenus et guidés par des rails coulissants ou glissières latérales. Lorsque le tiroir est chargé, tous les efforts appliqués verticalement passent par ces rails, ce qui engendre des contraintes de dimensionnement pour garantir le bon coulissement du rail. De tels rails sont coûteux et encombrants.

L'invention a pour but de pallier tout ou partie des inconvénients précédents en proposant un dispositif de coulissement qui assure une parfaite reprise d'effort vertical lorsque le tiroir est chargé, tout en ayant un coût de fabrication et de montage extrêmement limité.

A cet effet, l'invention a pour objet un dispositif de rangement d'un véhicule automobile comprenant un tiroir déplaçable en translation dans une cavité d'une structure fixe du véhicule, notamment une planche de bord, entre une position fermée et une position ouverte, le tiroir étant guidé dans son déplacement par des rails coulissants interposés entre les flancs latéraux du tiroir et des parois latérales de la cavité, caractérisé en ce qu'un bord avant du tiroir comporte des moyens de roulement avant permettant à une partie avant du tiroir de s'appuyer sur un plancher de la cavité, et en ce qu'un bord de la cavité adjacent à son ouverture comporte des moyens de roulement arrière sur lesquels s'appuie le plancher du tiroir, les moyens de roulement avant et arrière étant à galets pivotant autour d'un axe sensiblement horizontal et transversal à la direction de déplacement.

Les moyens de roulement constituent avantageusement des moyens d'appuis secondaires soulageant les rails coulissants vis-à-vis des efforts appliqués verticalement par la charge du tiroir.

D'autres caractéristiques avantageuses de l'invention sont définies ci-après.
Les moyens de roulement avant comportent un galet avant disposé dans une zone centrale du tiroir considérée suivant la direction transversale à la direction de déplacement.
Le galet avant est monté à rotation sur au moins une protubérance s'étendant en avant du tiroir.
Les moyens de roulements arrière comportent des galets latéraux disposés de part et d'autre d'un plan médian vertical longitudinal du tiroir.
Les galets latéraux sont disposés de part et d'autre d'un plan médian vertical longitudinal du tiroir dans une zone comprise entre ce plan médian et les flancs latéraux de la cavité et plus près de ces derniers.
L'axe de rotation des galets latéraux est situé en dessous de la face supérieure du plancher de la cavité, une portion périphérique supérieure uniquement des galets latéraux émergeant au-dessus de ladite face supérieure.
Les galets latéraux ont un diamètre supérieur au diamètre du galet avant, le rapport des diamètres étant notamment de l'ordre de deux.
Les rails coulissants comportent des butées de début et de fin de course.

L'invention a également pour objet une planche de bord comprenant un dispositif de rangement ayant tout ou partie des caractéristiques précédentes.
L'invention a également pour objet un véhicule automobile comprenant un dispositif de rangement ayant tout ou partie des caractéristiques précédentes.

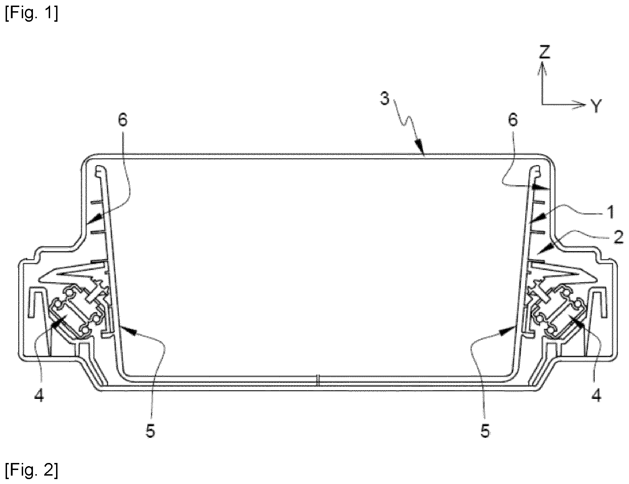

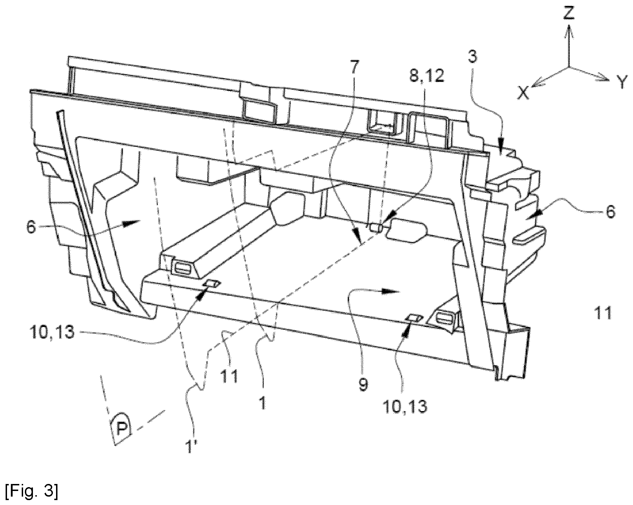

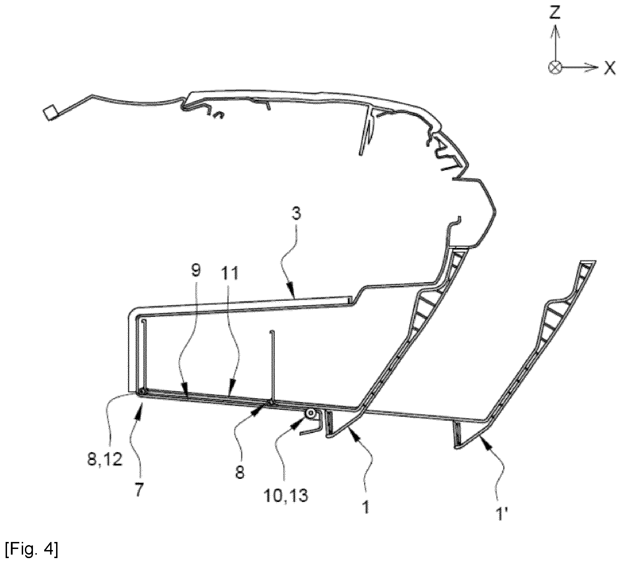

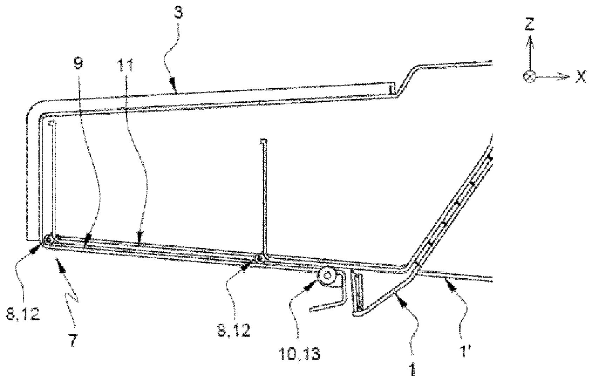

L'invention sera mieux comprise à la lecture de la description suivante d'un exemple non limitatif de l'invention, et à la lumière des dessins annexés.
[Fig. 1] représente une vue en élévation d'une section d'un tiroir coulissant d'un véhicule automobile selon l'art antérieur, la section étant réalisée dans un plan vertical transversal.
[Fig. 2] est une vue en perspective d'un dispositif de rangement selon l'invention, comprenant un tiroir coulissant représenté schématiquement dans les positions ouverte et fermée.
[Fig. 3] représente une vue en section transversale d'un dispositif de rangement selon l'invention, la section étant réalisée dans un plan vertical longitudinal, le tiroir coulissant étant représenté en position ouverte et fermée.
[Fig. 4] est une vue agrandie similaire à la figure 3.
Dans la description, les directions et orientations sont données en référence à un repère orthonormé direct classiquement utilisé en conception automobile, dans lequel X désigne la direction longitudinale avant - arrière du véhicule, pointant vers l'arrière du véhicule, Y est la direction transversale au véhicule pointant vers la droite du véhicule, et Z est la direction verticale, pointant vers le haut.
Les notions « avant » et « arrière » sont données en référence au sens de marche normal, vers l'avant du véhicule.
On a représenté à la figure 1 une section transversale dans un plan YZ d'un dispositif de rangement selon l'art antérieur. Ce dispositif comprend un tiroir 1 déplaçable en translation dans une cavité 2 d'une structure fixe 3 du véhicule. La structure fixe 3 est typiquement une planche de bord d'un véhicule automobile.
Le tiroir 1 est classiquement déplaçable entre une position fermée et une position ouverte. Le tiroir 1 est guidé dans son déplacement par des rails 4 coulissants latéraux interposés entre les flancs latéraux 5 du tiroir 1 et des parois latérales 6 de la cavité 2.
Dans la description ci-après qui illustre le dispositif de rangement selon l'invention, les rails 4 coulissants sont également prévus. Les mêmes références numériques sont par conséquent également reprises sur les figures 2 à 4.
Sur les figures 2 à 7, le tiroir en position fermée porte la référence 1 et le tiroir en position ouverte porte la référence 1'. Sur la figure 2, le tiroir 1, 1' est représenté schématiquement en trait mixte par la ligne médiane formant intersection du tiroir avec un plan médian vertical longitudinal du tiroir.
Dans le dispositif de l'invention, illustré aux figures 2 à 4, un bord avant 7 du tiroir 1 comporte des moyens de roulement avant 8 permettant à une partie avant du tiroir 1 de s'appuyer sur un plancher 9 de la cavité 2. De plus, un bord de la cavité 2 adjacent à son ouverture arrière comporte des moyens de roulement arrière 10 sur lesquels s'appuie le plancher 11 du tiroir 1. Ce bord de la cavité 2 est un bord du plancher 9 de la cavité 2 qui est adjacent à une face frontale de la structure fixe 3 de la planche de bord du véhicule. Les moyens de roulement avant 8 et arrière 10 sont des moyens à galets 12, 13 pivotant autour d'un axe sensiblement horizontal et transversal Y à la direction de déplacement X.
Les rails 4 latéraux coulissants forment des moyens d'appuis primaires pour supporter le tiroir 1. Les galets 12, 13 respectifs des moyens de roulements avant 8 et arrière 10 servent de moyens d'appuis secondaires pour soulager les efforts en Z supportés par la structure fixe 3. Par l'ajout des moyens d'appuis secondaire, les rails 4 sont non seulement soulagés mais peuvent également être dimensionnés de façon plus restreinte.
Le galet 12 des moyens de roulement avant 8 est disposé dans une zone centrale du tiroir 1 considérée suivant la direction transversale Y à la direction de déplacement X.
Le galet 12 avant est monté à rotation sur au moins une protubérance s'étendant en avant du tiroir 1.
Les moyens de roulements arrière 10 comportent des galets latéraux 13 disposés de part et d'autre d'un plan P médian vertical longitudinal du tiroir 1.
Les galets latéraux 13 sont disposés de part et d'autre du plan P médian vertical longitudinal du tiroir dans une zone comprise entre ce plan médian et les flancs latéraux de la cavité 2. Plus précisément, les galets latéraux 13 sont situés plus près des flancs latéraux 6 de la cavité 2 et idéalement dans le premier tiers environ de la distance séparant les flancs latéraux 6 du plan P médian, suivant la direction transversale Y.
L'axe de rotation des galets latéraux 13 est situé en dessous de la face supérieure du plancher 9 de la cavité 2. Une portion périphérique supérieure uniquement des galets latéraux 13 émerge au-dessus de la face supérieure du plancher 9, au travers d'une fenêtre ménagée dans ce plancher 9.
Les galets latéraux 13 ont un diamètre supérieur au diamètre du galet avant 12. Le rapport des diamètres entre le galet avant 12 et les galets latéraux 13 est d'environ deux.

On observe que zones d'appuis secondaires formées par le galet avant 12 et les galets latéraux 13 constituent globalement les sommets d'un triangle, de façon à assurer un isostatisme au niveau des zones d'appui.
Par ailleurs les rails coulissants 4 comportent des butées de début et de fin de course. Le début et la fin de course correspondent respectivement aux positions fermée et ouverte du tiroir 1, 1'.

Bien entendu, l'invention n'est pas limitée aux modes ou variantes de réalisation décrits précédemment et comprends tous les équivalents techniques de ces moyens.

## Revendications

1. Dispositif de rangement d'un véhicule automobile comprenant un tiroir (1, 1') déplaçable en translation dans une cavité (2) d'une structure fixe (3) du véhicule, notamment une planche de bord, entre une position fermée et une position ouverte, le tiroir (1, 1') étant guidé dans son déplacement par des rails (4) coulissants interposés entre les flancs latéraux (5) du tiroir (1, 1') et des parois latérales (6) de la cavité (2), **caractérisé en ce qu'**un bord avant (7) du tiroir (1) comporte des moyens de roulement avant (8) permettant à une partie avant du tiroir (1) de s'appuyer sur un plancher (9) de la cavité (2), et **en ce qu'**un bord de la cavité (2) adjacent à son ouverture comporte des moyens de roulement arrière (10) sur lesquels s'appuie le plancher (11) du tiroir (1, 1'), les moyens de roulement avant (8) et arrière (10) étant à galets (12, 13) pivotant autour d'un axe sensiblement horizontal et transversal à la direction de déplacement (X).

2. Dispositif de rangement selon la revendication 1, **caractérisé en ce que** les moyens de roulement avant (8) comportent un galet avant (12) disposé dans une zone centrale du tiroir (1, 1') considérée suivant la direction transversale (Y) à la direction de déplacement (X).

3. Dispositif de rangement selon la revendication 2, **caractérisé en ce que** le galet avant (12) est monté à rotation sur au moins une protubérance s'étendant en avant du tiroir (1).

4. Dispositif de rangement selon l'une quelconque des revendications 1 à 3, **caractérisé en ce que** les moyens de roulements arrière (10) comportent des galets latéraux (13) disposés de part et d'autre d'un plan P médian vertical longitudinal du tiroir (1).

5. Dispositif de rangement selon la revendication 4, **caractérisé en ce que** les galets latéraux (13) sont disposés de part et d'autre d'un plan (P) médian vertical longitudinal du tiroir (1) dans une zone comprise entre ce plan (P) médian et les flancs latéraux (6) de la cavité (2) et plus près de ces derniers (6).

6. Dispositif de rangement selon la revendication 4 ou 5, **caractérisé en ce que** l'axe de rotation des galets latéraux (13) est situé en dessous de la face supérieure du plancher (9) de la cavité (2), une portion périphérique supérieure uniquement des galets latéraux (13) émergeant au-dessus de ladite face supérieure.

7. Dispositif de rangement selon l'une quelconque des revendications 4 à 6, **caractérisé en ce que** les galets latéraux (13) ont un diamètre supérieur au diamètre du galet avant (12), le rapport des diamètres étant notamment de l'ordre de deux.

8. Dispositif de rangement selon l'une quelconque des revendications précédentes, **caractérisé en ce que** les rails (4) coulissants comportent des butées de début et de fin de course.

9. Planche de bord d'un véhicule automobile **caractérisé en ce qu'**elle comprend un dispositif de rangement selon l'une quelconque des revendications précédentes.

10. Véhicule automobile **caractérisé en ce qu'**il comprend un dispositif de rangement selon l'une quelconque des revendications 1 à 8.

## Patentansprüche

1. Unterbringungsvorrichtung eines Kraftfahrzeugs, umfassend ein Schubfach (1, 1'), das translatorisch in einem Hohlraum (2) einer feststehenden Struktur (3) des Fahrzeugs, insbesondere einem Armaturenbrett, zwischen einer geschlossenen Position und einer offenen Position beweglich ist, wobei das Schubfach (1, 1') bei seiner Bewegung von Gleitschienen (4) geführt wird, die zwischen den seitlichen Flanken (5) des Schubfachs (1, 1') und seitlichen Wänden (6) des Hohlraums (2) angeordnet sind, **dadurch gekennzeichnet, dass** ein vorderer Rand (7) des Schubfachs (1) vordere Rollmittel (8) aufweist, dank derer sich ein vorderer Teil des Schubfachs (1) auf einem Boden (9) des Hohlraums (2) abstützen kann, und dass ein Rand des Hohlraums (2), der seiner Öffnung benachbart ist, hintere Rollmittel (10) aufweist, auf denen sich der Boden (11) des Schubfachs (1, 1') abstützt, wobei die vorderen (8) und hinteren (10) Rollmittel Rollen (12, 13) sind, die um eine im Wesentlichen horizontale und quer zu der Bewegungsrichtung (X) verlaufende Achse schwenken.

2. Unterbringungsvorrichtung nach Anspruch 1, **dadurch gekennzeichnet, dass** die vorderen Rollmittel (8) eine vordere Rolle (12) aufweisen, die in einer in der quer zu der Bewegungsrichtung (X) verlaufenden Richtung (Y) gesehen mittleren Zone des Schubfachs (1, 1') angeordnet ist.

3. Unterbringungsvorrichtung nach Anspruch 2, **dadurch gekennzeichnet, dass** die vordere Rolle (12) drehbar an mindestens einem sich von dem Schubfach (1) nach vorne erstreckenden Vorsprung angebracht ist.

4. Unterbringungsvorrichtung nach einem der Ansprüche 1 bis 3, **dadurch gekennzeichnet, dass** die hinteren Rollmittel (10) seitliche Rollen (13) aufweisen, die beiderseits einer vertikalen Längsmittelebene P des Schubfachs (1) angeordnet sind.

5. Unterbringungsvorrichtung nach Anspruch 4, **dadurch gekennzeichnet, dass** die seitlichen Rollen (13) beiderseits einer vertikalen Längsmittelebene (P) des Schubfachs (1) in einer Zone zwischen dieser Mittelebene (P) und den seitlichen Flanken (6) des Hohlraums (2) und näher diesen Letzteren (6) angeordnet sind.

6. Unterbringungsvorrichtung nach Anspruch 4 oder 5, **dadurch gekennzeichnet, dass** die Rotationsachse der seitlichen Rollen (13) unter der oberen Fläche des Bodens (9) des Hohlraums (2) angeordnet ist, wobei lediglich ein oberer Umfangsabschnitt der seitlichen Rollen (13) über die obere Fläche vorragt.

7. Unterbringungsvorrichtung nach einem der Ansprüche 4 bis 6, **dadurch gekennzeichnet, dass** der Durchmesser der seitlichen Rollen (13) größer als der Durchmesser der vorderen Rolle (12) ist, wobei das Verhältnis der Durchmesser insbesondere ungefähr zwei beträgt.

8. Unterbringungsvorrichtung nach einem der vorhergehenden Ansprüche, **dadurch gekennzeichnet, dass** die Gleitschienen (4) Weganfangs- und -endanschläge aufweisen.

9. Armaturenbrett eines Kraftfahrzeugs, **dadurch gekennzeichnet, dass** es eine Unterbringungsvorrichtung nach einem der vorhergehenden Ansprüche umfasst.

10. Kraftfahrzeug, **dadurch gekennzeichnet, dass** es eine Unterbringungsvorrichtung nach einem der Ansprüche 1 bis 8 umfasst.

## Claims

1. Motor vehicle storage device comprising a drawer (1, 1') that can be moved in translation in a cavity (2) of a fixed structure (3) of the vehicle, in particular a dashboard, between a closed position and an open position, the drawer (1, 1') being guided in its movement by sliding rails (4) interposed between the lateral flanks (5) of the drawer (1, 1') and lateral walls (6) of the cavity (2), **characterized in that** a front edge (7) of the drawer (1) comprises front rolling-element means (8) that allow a front part of the drawer (1) to rest on a floor (9) of the cavity (2), and **in that** an edge of the cavity (2) adjacent to its opening comprises rear rolling-element means (10) on which the floor (11) of the drawer (1, 1') rests, the front rolling-element means (8) and the rear rolling-element means (10) being of the type having rollers (12, 13) that pivot about an axis that is substantially horizontal and transverse to the direction of movement (X).

2. Storage device according to Claim 1, **characterized in that** the front rolling-element means (8) comprise a front roller (12) arranged in a central region of the drawer (1, 1'), considered along the direction (Y) that is transverse to the direction of movement (X).

3. Storage device according to Claim 2, **characterized in that** the front roller (12) is mounted so as to be able to rotate on at least one protuberance extending in front of the drawer (1).

4. Storage device according to any one of Claims 1 to 3, **characterized in that** the rear rolling-element means (10) comprise lateral rollers (13) arranged on either side of a longitudinal vertical median plane P of the drawer (1).

5. Storage device according to Claim 4, **characterized in that** the lateral rollers (13) are arranged on either side of a longitudinal vertical median plane (P) of the drawer (1), in a region between this median plane (P) and the lateral flanks (6) of the cavity (2), and closer to these flanks (6).

6. Storage device according to Claim 4 or 5, **characterized in that** the axis of rotation of the lateral rollers (13) is located below the upper face of the floor (9) of the cavity (2), with only an upper peripheral portion of the lateral rollers (13) emerging above said upper face.

7. Storage device according to any one of Claims 4 to 6, **characterized in that** the lateral rollers (13) have a diameter that is greater than the diameter of the front roller (12), the ratio between the diameters being in particular of the order of two.

8. Storage device according to any one of the preceding claims, **characterized in that** the sliding rails (4) comprise start-of-travel and end-of-travel stops.

9. Motor vehicle dashboard, **characterized in that** it comprises a storage device according to any one of the preceding claims.

10. Motor vehicle, **characterized in that** it comprises a storage device according to any one of Claims 1 to 8.
